# EUROPEAN PATENT SPECIFICATION

(11) **EP 4 318 810 B1**
(45) Date of publication and mention of the grant of the patent: **12.11.2025**
(21) Application number: 22775491.8
(22) Date of filing: 18.03.2022
(51) Int. Cl.: H01R 4/02, H01R 43/02, H01R 4/22, H01R 4/28, H02G 1/14, H01R 43/28

(54) **ELECTRIC CABLE CONNECTING METHOD, JOINED ELECTRIC CABLE, ELECTRIC CABLE FIXING DEVICE, AND JOINED ELECTRIC CABLE MANUFACTURING DEVICE**
VERFAHREN ZUM VERBINDEN VON ELEKTRISCHEN KABELN, ELEKTRISCHES VERBINDUNGSKABEL, BEFESTIGUNGSVORRICHTUNG FÜR ELEKTRISCHE KABEL UND HERSTELLUNGSVORRICHTUNG FÜR VERBUNDENE ELEKTRISCHE KABEL
PROCÉDÉ DE CONNEXION DE CÂBLES ÉLECTRIQUES, CÂBLE ÉLECTRIQUE JOINT, DISPOSITIF DE FIXATION DE CÂBLES ÉLECTRIQUES, ET DISPOSITIF DE FABRICATION DE CÂBLE ÉLECTRIQUE JOINT

(30) Priority: 23.03.2021 JP 2021048844
(43) Date of publication of application: 07.02.2024
(73) Proprietor: FURUKAWA ELECTRIC CO., LTD., Tokyo 100-8322 (JP); Furukawa Automotive Systems Inc., Inukami-gun, Shiga 522-0242 (JP)
(72) Inventor: NAKAMURA Toshihiro, Tokyo 100-8322 (JP); HIGUCHI Kazuhiro, Tokyo 100-8322 (JP); TORIMOTO Yukihiro, Inukami-gun, Shiga 522-0242 (JP); NAKAYAMA Tomohiro, Inukami-gun, Shiga 522-0242 (JP); TAKANO Hiroshi, Tokyo 100-8322 (JP); NAKAGAWA Ryo, Tokyo 100-8322 (JP)
(74) Representative: HKW Intellectual Property PartG mbB
(86) International application number: PCT/JP2022/012811
(87) International publication number: WO 2022/202704

(56) References cited:
- EP-A1- 2 209 161
- DE-A1- 19 717 317
- JP-A- 2002 191 109
- JP-A- 2009 099 346
- JP-A- 2010 170 978
- JP-A- 2013 026 018
- JP-A- 2013 026 018
- JP-A- 2013 225 394
- JP-A- 2013 257 967
- JP-A- 2016 091 629
- JP-A- H0 888 069
- JP-A- H0 888 069
- JP-Y1- S4 117 327
- US-A1- 2010 096 185

## Description

### TECHNICAL FIELD

The present invention relates to an electric cable connection method for connecting, for example, conductors exposed from a plurality of covered electric cables so as to establish conductivity, a joined electric cable, an electric cable fixing device, and a joined electric cable production device.

### BACKGROUND ART

As electric cables included in a wire harness wired in a vehicle, covered electric cables each including a conductor formed of a plurality of core wires and an insulating cover covering the conductor are used, for example. In order to connect such covered electric cables to each other so as to establish conductivity, terminal conductors exposed from the insulating covers may be connected to each other.

As a method for connecting terminals of such covered electric cables, WO 2019 225492 A, for example, discloses a method by which terminal conductors exposed from ends of covered electric cables are disposed between a horn and an anvil included in an ultrasonic joining device, and are joined together by the ultrasonic joining device.

However, the method disclosed in WO 2019 225492 A has an undesirable possibility that when the terminal conductors exposed from the insulating covers are disposed between the horn and anvil, the terminal conductors are dispersed. In this case, the terminal conductors are not joined in a desired positional arrangement, and thus the quality of the product may not be stabilized.

JP H08 88069 discloses a wire bundling and holding device that is equipped with paired wire bundling hold members provided with wire insertion opening sections capable of being contracted and enlarged, a first drive means contracting and enlarging the aforesaid opening section, and with a second drive means allowing the paired wire bundling and holding means to be moved in the directions for approaching and parting the means along the longer direction of wires. And a core wire group bundled and held together is welded by inserting the welding vibrating piece of an ultrasonic welding means between the paired wire bundling and holding members in a state that the tip ends of a plurality of core wires and insulating covers are bundled and held by the paired wire bundling and holding members.

JP 2009-099346A discloses a wire end connection structure and method, wherein each electric wire has a conductor and an insulated film, and the conductor is exposed to the outside at its terminal. The electric wires are bundled to make the exposed conductors uniform one another, and a common connection section is formed by integrating the conductors by melting and welding. Further, a constraint member is integrated with the common connection section by using the melted welding. The constraint member constrains a change of an angle of each conductor to the common connection section by constraining the bundle of the electric wires from the outside at a range from the common connection section to the insulated film.

US 2010/096185 A1 discloses a wiring harness including insulated wires whose conductors are partly exposed, and a metal leaf with which the exposed conductors are bound, where the bound conductors are welded preferably by ultrasonic welding, and the conductors including elemental wires have a joining portion where the elemental wires are joined together, the joining portion being inside the metal leaf. The elemental wires and the metal leaf are preferably made from copper, a copper alloy, aluminum and/or an aluminum alloy, and are preferably made from a same metal or a same alloy. At least one of the conductors preferably has a cross-sectional area of 0.35 mm2 or less.

JP 2013-257967 A discloses a wiring harness comprising a plurality of insulation electric wires, a junction part, and a step formation member. The junction part is a part where conductors extending from an insulation coating are joined at an end part of the insulation electric wire. The step formation member is attached to a part of the insulation coating in the plurality of insulation electric wires connected by the junction part while surrounding its circumference, and forms a step to the insulation coating.

JP 2013-225394 A discloses a splice structure of a wire bundle and a manufacturing method of the splice structure of the wire bundle. A first winding process, where a fixing tape is wound around a coated part of a coated electric wire from among the coated electric wires, is conducted. Subsequently, a second winding process, where an extension region of the fixing tape is wound around the coated parts 2 of the entire coated electric wires, is conducted. Lastly, ultrasonic-welding process is performed to tip regions of exposed core wire portions in the coated electric wires to integrate the tip regions of the exposed core wire portions and form a splice part.

JP 2002-191109 A discloses an electric wire connection structure in a wire harness, wherein at least one core wire extending from a connection portion that integrates the core wires of a plurality of electric wires has an end covering layer separated from a main covering layer, and other core wires extending from the connection portion also have a main covering layer or an end covering layer separated from the main covering layer, and an exterior member that covers the connection portion from the outside is coated over the covering layers on both sides of the connection portion of each of the connected electric wires.

### SUMMARY OF INVENTION

### TECHNICAL PROBLEM

The present invention made in light of the above-described problem has an object of providing an electric cable connection method for joining terminal conductors in an assembled state, a joined electric cable, an electric cable fixing device, and a joined electric cable production device.

### SOLUTION TO PROBLEM

The present invention is directed to an electric cable connection method having the features of claim 1.

The present invention is also directed to a joined electric cable having the features of claim 5.

The fixing member encompasses, for example, a resin or metal member covering and fixing the tip portions of the terminal conductors in an assembled state, an adhesive or a pharmaceutical drug applied to, or used to immerse, the tip portions of the terminal conductors and thus attached to the terminal conductors, and insulating covers covering the tip portions of the terminal conductors exposed from the covered electric cables.

The expression "fixing the terminal conductors with the fixing member" encompasses fixing the terminal conductors with the fixing member directly and indirectly. The above-mentioned expression encompasses, for example, attaching the fixing member to the terminal conductors directly to fix the terminal conductors, and also encompasses attaching the fixing member to the insulating covers covering the tip portions of the terminal conductors to fix the terminal conductors indirectly.

The joining device may be any device that connects the terminal conductors together so as to establish conductivity. The joining device encompasses any other device using electric cables such as, for example, an ultrasonic joining device, a laser joining device, a pressure-contact joining device, a resistance welding device, and the like.

According to the present invention, the terminal conductors exposed from the insulating covers are fixed with the fixing member, and thus the terminal conductors are prevented from being dispersed. Therefore, the terminal conductors fixed while being assembled in a desired positional arrangement or a desired positional relationship are disposed in the joining device, and are connected together so as to establish conductivity. Thus, a joined electric cable having a stable conductivity is produced.

The terminal conductors may be assembled in any positional arrangement so as to have a cross-section that is trapezoidal, diamond-shaped or of any other quadrangular shape, hexagonal, of a polygonal shape close to a circle, or the like.

In an embodiment of the present invention, the electric cable connection method may further include a removal step of removing the fixing member.

According to the present invention, the tip portions, of the terminal conductors, that are unnecessary are removed.

The expression "removing the fixing member" encompasses, for example, detaching and thus removing the fixing member; cutting or dissolving portions, of the terminal conductors, including the fixing member; cutting or dissolving the portions, of the terminal conductors, fixed with the fixing member; and the like.

In an embodiment of the present invention, the removal step may be performed before the joining step.

According to the present invention, the terminal conductors are connected together so as to establish conductivity with no risk of, for example, the joining device interfering with the fixing member.

In an embodiment of the present invention, the joining step may be performed before the removal step.

According to the present invention, the terminal conductors in an assembled state with certainty are connected together so as to establish conductivity. Thus, a joined electric cable having a stable conductivity is produced.

In an embodiment of the present invention, the fixing member is a melt-curable member curable after being melted.

According to the present invention, the terminal conductors are fixed with certainty with the fixing member cured after being melted. Therefore, the terminal conductors are assembled easily and with certainty. This improves the work efficiency of the assembly step, and suppresses the movement of each of the terminal conductors in the fixing step. Therefore, a joined electric cable having a stable conductivity is produced more efficiently.

In an embodiment of the present invention, the electric cable connection method further includes a semi-strip step, performed before the fixing step, of cutting insulating covers such that portions, of the insulating covers, having a length at least equal to that of the terminal conductors of the covered electric cables are separated from the remaining portions of the insulating covers, and shifting the separated portions of the insulating covers in a direction toward tip ends thereof such that the shifted portions of the insulating covers are closer to tip ends of the covered electric cables than the terminal conductors. The fixing step includes a step of welding and fixing the shifted portions of the insulating covers. The portions, of the insulating covers, that are welded and fixed are used as the melt-curable member.

According to the present invention, the step required to expose the terminal conductors to be joined together is performed in the semi-strip step, and the semi-strip step is made a part of the fixing step. Therefore, as compared with the case where, for example, the terminal conductors are fixed with a resin or the like after the insulating covers are cut, the amount of work in the fixing step is decreased. This improves the production efficiency of the joined electric cable.

The portions, of the insulating covers, that are to be discarded after the terminal conductors are exposed, are used to fix the terminal conductors. Therefore, the terminal conductors are assembled and fixed efficiently with no use of another element, and the element to be discarded is effectively used.

The portions, of the insulating covers, that are removed in the removal step are welded to be fixed and assembled. This prevents a situation where tiny pieces of the element to be discarded are scattered.

The present invention is directed to an electric cable fixing device having the features of claim 6 or claim 10.

The present invention is also directed to a joined electric cable production device for producing a joined electric cable. The joined electric cable includes a plurality of covered electric cables and a fixing member fixing tip portions, of a plurality of terminal conductors, exposed from the plurality of covered electric cables at a position near tip ends thereof. The plurality of terminal conductors fixed with the fixing member are joined together. The joined electric cable production device includes an electric cable disposing device for disposing the plurality of covered electric cables; an electric cable connection device for connecting the plurality of terminal conductors; and the above-described electric cable fixing device.

According to the present invention, the terminal conductors in an assembled state are fixed with the fixing member by use of the electric cable fixing device. This improves the efficiency of the production work of the joined electric cable.

In an embodiment of the present invention, the fixing mechanism cuts a plurality of insulating covers such that portions, of the plurality of insulating covers, having a length at least equal to that of the terminal conductors of the covered electric cables are separated from the remaining portions of the insulating covers, the separated portions of the insulating covers being shifted in a direction toward tip ends thereof, and attaches the fixing member to the shifted portions of the plurality of insulating covers and fix the shifted portions of the insulating covers.

According to the present invention, the portions, of the insulating covers, that are at the tip ends of the terminal conductors in an assembled state are fixed with the fixing member by use of the electric cable fixing device. This improves the efficiency of the production work of the joined electric cable. The portions, of the insulating covers, that are removed in the removal step are welded to be fixed and assembled. This prevents a situation where tiny pieces of the element to be discarded are scattered.

In an embodiment of the present invention, the fixing member may be formed of a pressure-sensitive adhesive tape. The fixing mechanism may include a taping device for pasting the fixing member to the tip portions of the terminal conductors to fix the terminal conductors.

According to the present invention, the pressure-sensitive adhesive tape is pasted to the terminal conductors easily and at a uniform precision by use of the electric cable fixing device. This improves the efficiency of the production work of the joined electric cable. The tip portions, of the terminal conductors, that are to be removed in the removal step are fixed with the pressure-sensitive adhesive tape and assembled. This prevents a situation where tiny pieces of the element to be discarded are scattered.

In an embodiment of the present invention, the fixing member may be formed of an ultraviolet-curable resin curable by being irradiated with ultraviolet rays. The fixing mechanism may include a resin application device for applying the fixing member to the tip portions of the terminal conductors, and an ultraviolet radiation device for radiating the ultraviolet rays toward the tip portions of the terminal conductors having the fixing member applied thereto.

According to the present invention, the tip portions of the terminal conductors are assembled with the ultraviolet-curable resin by use of the electric cable fixing device. This improves the efficiency of the production work of the joined electric cable. The tip portions, of the terminal conductors, that are to be removed in the removal step are fixed with the ultraviolet-curable resin and assembled. This prevents a situation where tiny pieces of the element to be discarded are scattered.

In an embodiment of the present invention, the fixing member may be a melt-curable member curable after being melted. The fixing mechanism may include a heating device for melting the fixing member.

According to the present invention, the tip portions of the terminal conductors are assembled with the fixing member cured after being heated and thus melted by use of the electric cable joining device. This improves the efficiency of the production work of the joined electric cable. The tip portions, of the terminal conductors, that are to be removed in the removal step are fixed with the fixing member and assembled. This prevents a situation where tiny pieces of the element to be discarded are scattered.

In an embodiment of the present invention, the fixing mechanism may include a heating device. The heating device cuts a plurality of insulating covers such that portions, of a plurality of insulating covers, having a length at least equal to that of the terminal conductors of the covered electric cables are separated from the remaining portions of the insulating covers, the separated portions of the insulating covers being shifted in a direction toward tip portions thereof, and melts the shifted portions of the plurality of insulating covers such that the shifted portions are used as a melt-curable member curable after being melted.

According to the present invention, the portions, of the insulating covers, covering the tip portions of the terminal conductors, are shifted in a direction toward tip portions thereof, and are melted by the heating device and then cured, by use of the electric cable fixing device. Therefore, the terminal conductors are assembled with certainty. This improves the efficiency of the production work of the joined electric cable. The tip portions, of the terminal conductors, that are to be removed in the removal step are fixed with the cured insulating covers and assembled. This prevents a situation where tiny pieces of the element to be discarded are scattered.

The portions, of the insulating covers, that are to be discarded after the terminal conductors are exposed, are used to fix the terminal conductors. Therefore, the terminal conductors are assembled and fixed efficiently with no use of another element, and the element to be discarded is effectively used.

### ADVANTAGEOUS EFFECTS OF INVENTION

The present invention provides an electric cable connection method for joining terminal conductors in an assembled state, a joined electric cable, an electric cable fixing device, and a joined electric cable production device.

### BRIEF DESCRIPTION OF DRAWINGS

[FIG. 1] FIG. 1 is a schematic perspective view of a conductor-joined electric cable.
[FIG. 2] FIG. 2 is a flowchart of an electric cable connection method.
[FIG. 3] FIG. 3 is a schematic perspective view showing a semi-strip step and an assembly step.
[FIG. 4] FIG. 4 is a schematic perspective view showing a fixing step.
[FIG. 5] FIG. 5 includes schematic perspective views showing a joining step.
[FIG. 6] FIG. 6 is a block diagram of a joining device.
[FIG. 7] FIG. 7 includes cross-sectional views showing the joining step and a removal step.
[FIG. 8] FIG. 8 is a schematic perspective view of a joined electric cable.
[FIG. 9] FIG. 9 is a flowchart of another electric cable connection method.
[FIG. 10] FIG. 10 includes schematic perspective views showing a joining step in another embodiment.
[FIG. 11] FIG. 11 includes schematic perspective views showing a joining step in still another embodiment.
[FIG. 12] FIG. 12 includes schematic perspective views showing a joining step in still another embodiment.
[FIG. 13] FIG. 13 includes schematic perspective views showing a joining step in still another embodiment.
[FIG. 14] FIG. 14 includes schematic perspective views showing a joining step in still another embodiment.

### DESCRIPTION OF EMBODIMENTS

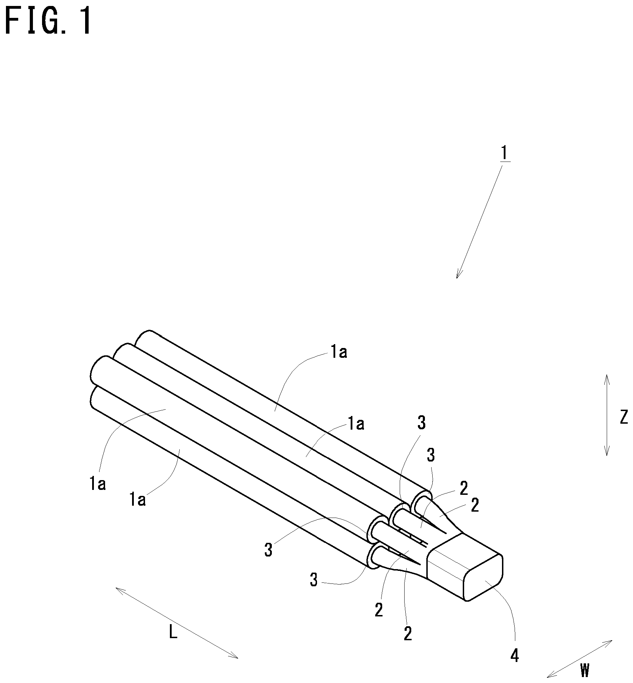

Hereinafter, an embodiment of the present invention will be described with reference to FIG. 1 through FIG. 8.

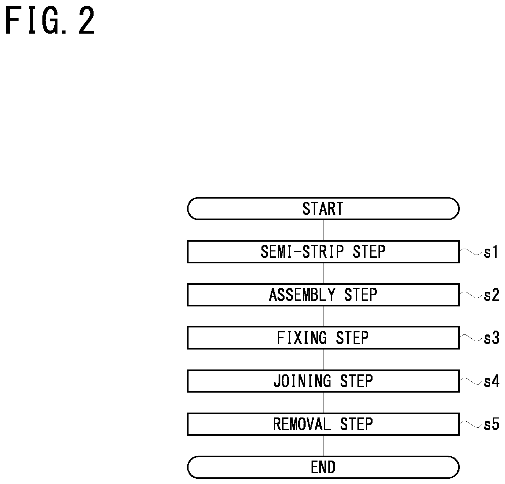

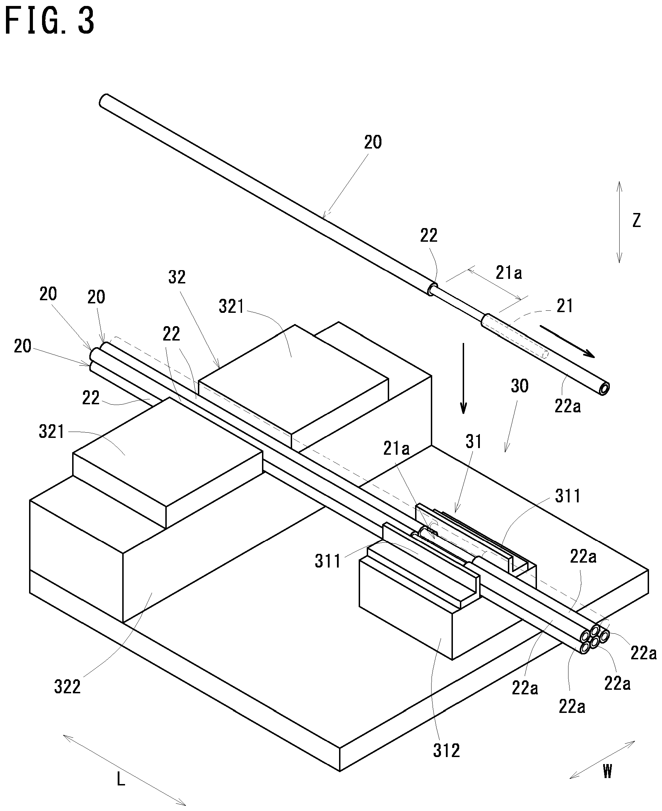

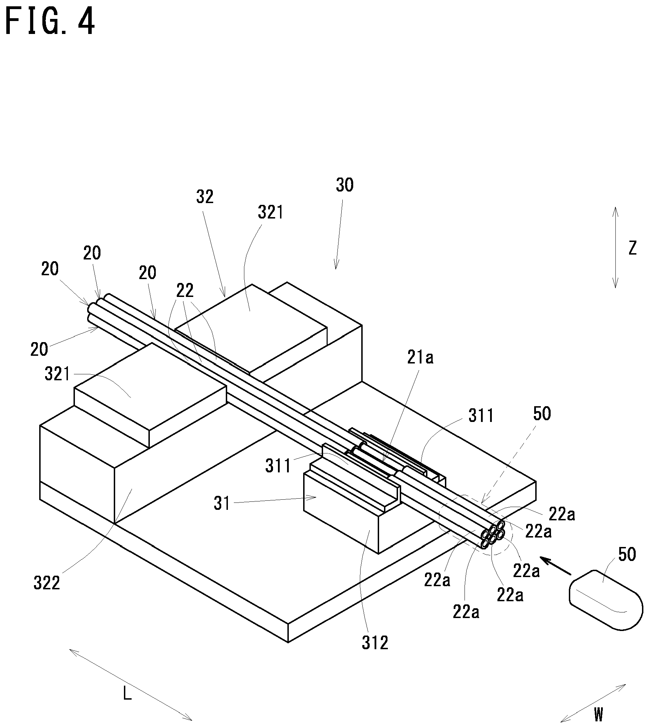

FIG. 1 is a schematic perspective view of a conductor-joined electric cable 1. FIG. 2 is a flowchart of an electric cable connection method. FIG. 3 is a schematic perspective view showing a semi-strip step s1 and an assembly step s2. FIG. 4 is a schematic perspective view showing a fixing step s3.

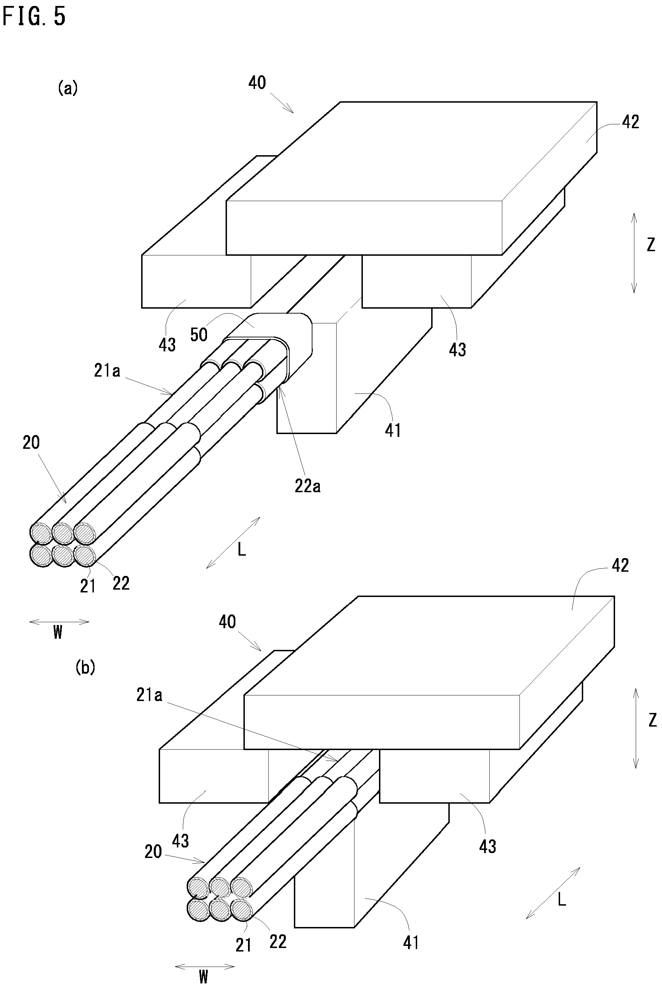

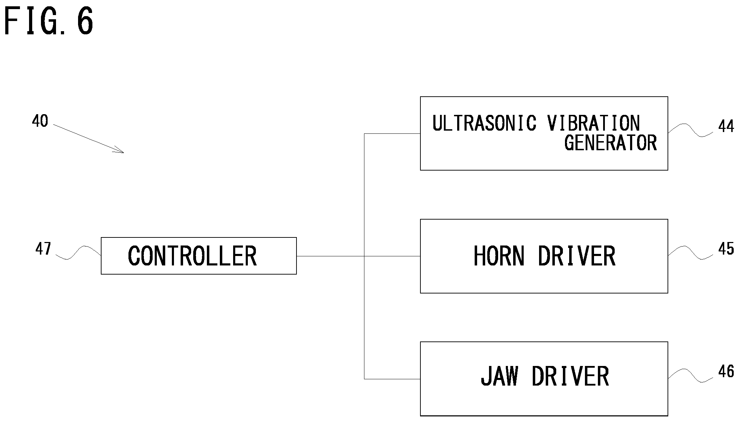

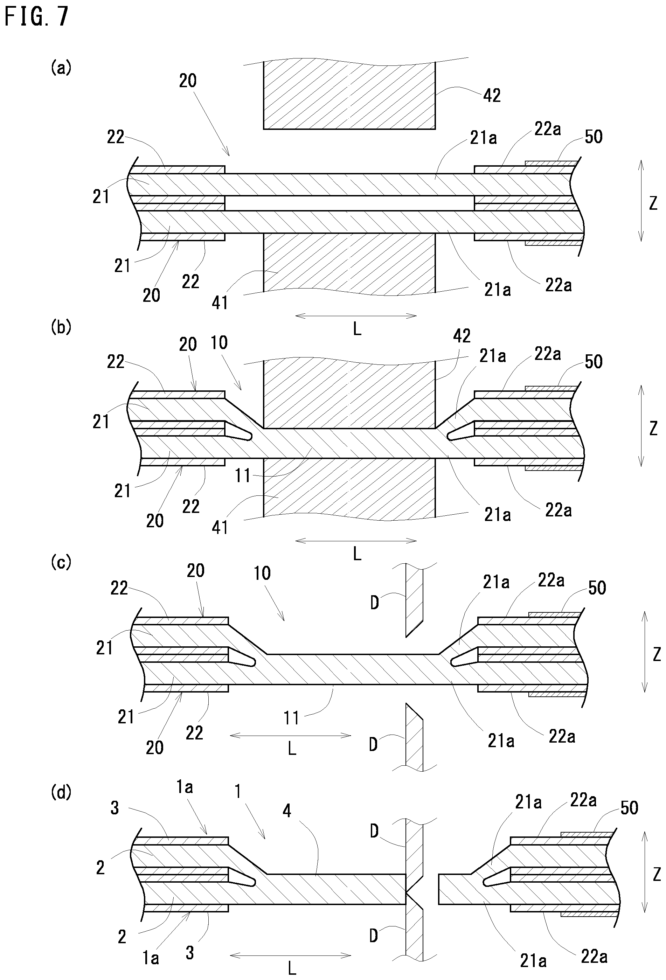

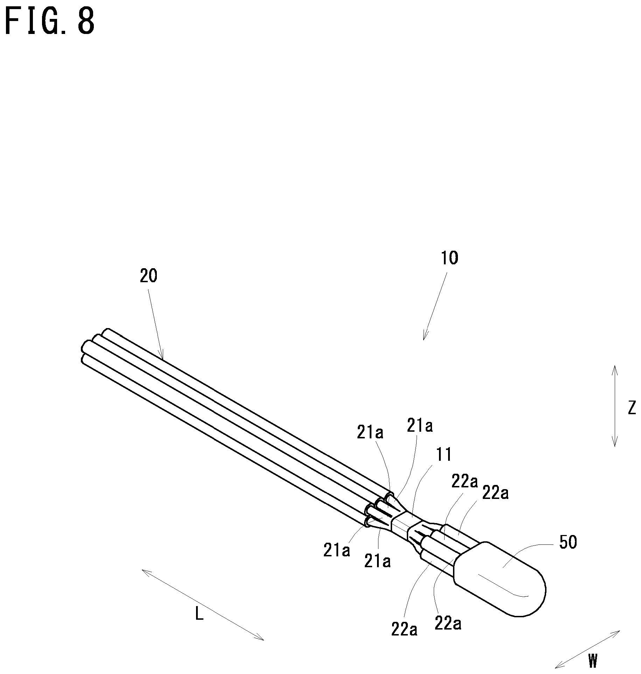

FIG. 5 include schematic perspective views showing a joining step s4. FIG. 6 is a block diagram of an electric cable connection device 40. FIG. 7 includes cross-sectional views showing the joining step s4 and a removal step s5. FIG. 8 is a schematic perspective view of a joined electric cable 10, which includes terminal conductors 21a joined together and a resin cover 50 attached to tip portions thereof.

The cross-sectional views in FIG. 7 are each of a central portion, in a width direction W, of the joined portion or the portions to be joined together, of the plurality of terminal conductors 21a, the cross-sectional views being taken along a longitudinal direction L.

Herein, referring to FIG. 1, an up-down direction will be referred to as an up-down direction Z, and a direction in which the conductor-joined electric cable 1 extends will be referred to as the longitudinal direction L. The longitudinal direction L and the up-down direction Z are perpendicular to each other. Referring to FIG. 1, a direction perpendicular to the longitudinal direction L and the up-down direction Z will be referred to as the width direction W. Referring to FIG. 1, an end toward which conductors 2 are exposed and extended in the longitudinal direction L will be referred to as a "tip end", and an end opposite thereto will be referred to as a "base end".

These directions are also applicable to FIG. 3 through FIG. 5, FIG. 7, FIG. 8 and FIG. 10 through FIG. 14.

An electric cable connection method described below is a method for connecting the terminal conductors 21a exposed from a plurality of covered electric cables 20, such that the terminal conductors 21a are conductive. This method is performed as follows. The terminal conductors 21a are exposed from insulating covers 22 of the plurality of covered electric cables 20 at a position near tip ends of the covered electric cables 20. The plurality of covered electric cables 20 are assembled together in a desired positional arrangement. The tip portions of the terminal conductors 21a are fixed. An electric cable connection device 40 is used to cause a predetermined compressive force to act on the plurality of terminal conductors 21a located in the desired positional arrangement and also to apply an ultrasonic vibration to the plurality of terminal conductors 21a, so that the plurality of terminal conductors 21a are connected together so as to establish conductivity. In this manner, the conductor-joined electric cable 1 is produced.

As shown in FIG. 1, the conductor-joined electric cable 1 produced according to the present invention includes six covered electric cables 1a and a terminal joining portion 4. The six covered electric cables 1a each include the conductor 2 and an insulating cover 3 covering the conductor 2. The terminal joining portion 4 is located around tip portions of the six covered electric cables 1a, and joins portions of the conductors 2 exposed from the insulating covers 3.

As described above, the conductor-joined electric cable 1 is produced by assembling the plurality of covered electric cables 20 in a desired positional arrangement and joining conductors 21 (the terminal conductor 21a) together. The covered electric cables 20 each include the conductor 21, which is a strand of a plurality of wires formed of an aluminum alloy, and an insulating cover 22 covering the conductor 21 (see FIG. 3). The terminal conductors 21a to be joined together are each a portion of the conductor 21 that is exposed from the insulating cover 22 at the position near the tip end of the covered electric cable 20.

Now, with reference to FIG. 3, FIG. 5 and FIG. 6, an electric cable disposing device 30 for disposing the covered electric cables 20 and the electric cable connection device 40 for joining the terminal conductors 21a together will be briefly described.

As shown in FIG. 3, the electric cable disposing device 30 includes a conductor disposing member 31 disposing, in a predetermined positional arrangement, the terminal conductors 21a exposed from the insulating covers 22 at the position near the tip ends of the covered electric cables 20, and a cover disposing member 32 disposing base-side portions, of the insulating covers 22, closer to base ends of the covered electric cables 20 than the terminal conductors 21a. The conductor disposing member 31 and the cover disposing member 32 are aligned in the longitudinal direction L.

The conductor disposing member 31 includes a pair of conductor-side movable walls 311 movable in the width direction W and a conductor carrying table 312, on which the terminal conductors 21a may be disposed. The conductor-side movable walls 311 are located on a top surface of the conductor carrying table 312, and a distance between the conductor-side movable walls 311 is changeable when necessary in accordance with the number or the positional arrangement of the covered electric cables 20 to be joined together. The insulating covers 22 may also be disposed between the conductor-side movable walls 311, with the terminal conductors 21a being at a center.

The cover disposing member 32 includes a pair of cover-side movable walls 321 movable in the width direction W and a cover carrying table 322, on which the insulating covers 22 may be disposed. Like the conductor-side movable walls 311, the cover-side movable walls 321 are located on a top surface of the cover carrying table 322, and a distance between the cover-side movable walls 321 is changeable when necessary in accordance with the number or the positional arrangement of the covered electric cables 20 to be joined together.

The electric cable disposing device 30 in this embodiment is not limited to having the above-described structure, and may have any structure as long as the terminal conductors 21a are disposed in a desired positional arrangement. For example, the electric cable disposing device 30 may include a member that presses the terminal conductors 21a and the insulating covers 22 from above, or may have a structure in which only tip portions of the covered electric cables 20 are disposed in a desired positional arrangement, with the terminal conductors 21a being at a center.

The electric cable connection device 40 for joining the plurality of terminal conductors 21a is a general ultrasonic joining device. As shown in FIG. 5(a) and FIG. 5(b), the electric cable connection device 40 includes an anvil 41, on which the plurality of terminal conductors 21a may be disposed, a horn 42 approaching the terminal conductors 21a disposed on the anvil 41 from above and causing an ultrasonic vibration to act on the terminal conductors 21a, and a restriction member 43 movable in the width direction W along a bottom surface of the horn 42 to restrict the plurality of terminal conductors 21a in the width direction W.

As shown in FIG. 6, the electric cable connection device 40 also includes an ultrasonic vibration generator 44 causing an ultrasonic vibration of the horn 42, a horn driver 45 moving the horn 42 in the up-down direction Z, a jaw driver 46 moving the restriction member 43 in the width direction W, and a controller 47 connected with, and controlling, the ultrasonic vibration generator 44, the horn driver 45 and the jaw driver 46.

The controller 47 controls the ultrasonic vibration of the horn 42 to be on or off, and controls the driving of the horn driver 45 and the jaw driver 46. With such a structure, the movement of the horn 42 in the up-down direction Z and the movement of the restriction member 43 in the width direction W are controlled such that a pressure of a predetermined value acts on the terminal conductors 21a of the plurality of covered electric cables 20, while the ultrasonic vibration of the horn 42 is caused. In this manner, the plurality of terminal conductors 21a are joined together.

Now, a method for producing the conductor-joined electric cable 1 using the electric cable disposing device 30 and the electric cable connection device 40 will be described.

As shown in FIG. 2, the electric cable connection method for producing the conductor-joined electric cable 1 mainly includes five steps. Specifically, the electric cable connection method includes a semi-strip (also referred to as "half-strip") step s1 of peeling off tip portions of the insulating covers 22 of the covered electric cables 20 to expose the conductors 21, an assembly step s2 of assembling the plurality of covered electric cables 20 including the exposed conductors 21 such that the plurality of covered electric cables 20 are in a desired positional arrangement, a fixing step s3 of fixing the exposed conductors 21 of the assembly of the plurality of covered electric cables 20, a joining step s4 of joining the exposed conductors 21 of the assembly of the plurality of covered electric cables 20, and a removal step s5 of removing a fixing member used in the fixing step s3.

Hereinafter, each of the steps will be described in detail.

First, as shown in FIG. 3, the tip portions of the insulating covers 22 of the covered electric cables 20 are cut off and are shifted by a predetermined length in the longitudinal direction L in a direction toward tip ends thereof, to expose the conductors 21 (semi-strip step s1).

The portions of the insulating covers 22 moved toward the tip ends will be referred to as "slit covers 22a", and the exposed portions of the conductors 21 will be referred to as the "terminal conductors 21a". That is, the slit covers 22a are portions of the insulating covers 22 having a length at least equal to that of the terminal conductors 21a, and are shifted in a direction toward the tip ends thereof so as to be separated from the base-side portions of the insulting covers 22.

As represented by the dotted line in FIG. 3 for the sake of convenience, tip portions of the conductors 21 are inserted into the slit covers 22a to a center thereof.

Next, the plurality of covered electric cables 20 are assembled and are disposed in the electric cable disposing device 30, such that the terminal conductors 21a exposed at the position near the tip ends of the covered electric cables 20 are in a predetermined positional arrangement (assembly step s2). In this embodiment, three covered electric cables 20 located side by side in the width direction W are stacked in two stages in the up-down direction Z.

Specifically, the conductor-side movable walls 311 are moved in the width direction W to cause the terminal conductors 21a to be on the conductor carrying table 312 and to be sandwiched between the conductor-side movable walls 311, such that the terminal conductors 21a are kept in the positional arrangement in which the three terminal conductors 21a are on the top stage and the three terminal conductors 21a are on the bottom stage.

In addition, the cover-side movable walls 321 are moved in the width direction W to cause the base-side portions of the six insulating covers 22 to be on the cover carrying table 322 and to be sandwiched between the cover-side movable walls 321, such that such portions of the insulating covers 22 are kept in the same positional arrangement. As a result, the six covered electric cables 20 are assembled in the predetermined positional arrangement (assembly step s2).

The positional arrangement of the covered electric cables 20 is not limited to above-described positional arrangement, and may be changed when necessary. The number of the covered electric cables 20 on the top stage and the number of the covered electric cables 20 on the bottom stage do not need to be equal to each other, and may be different from each other. The top stage and the bottom stage are provided in the up-down direction Z.

Although not shown in this embodiment, for example, the base-side portions of the insulating covers 22 may be positionally aligned at base ends thereof, or the slit covers 22a may be positionally aligned at tip ends thereof, so that the terminal conductors 21a are positionally aligned at base ends or tip ends thereof.

Next, as shown in FIG. 4, in a state where the six covered electric cables 20 are disposed in the desired positional arrangement in the electric cable disposing device 30, a resin cover 50 usable as a thermally melt-curable member is attached to the slit covers 22a moved in a direction toward the tip ends thereof. The resin cover 50 is formed of a thermoplastic resin, which is melted by being heated and cured by being cooled.

The resin cover 50 is heated to be melted, and then, is cooled to be cured. As a result, the six slit covers 22a are fixed as an integral body with the resin cover 50. In this manner, the terminal conductors 21a of the assembly of the plurality of covered electric cables 20 are fixed together with the resin 50 fixed to the plurality of slit covers 22a (fixing step s3).

As described above, the six covered electric cables 20 assembled such that the terminal conductors 21a are positionally aligned are fixed as an integral body with the resin cover 50. Thus, when, for example, the assembly of the covered electric cables 20 is moved from the electric cable disposing device 30 to the electric cable connection device 40, the terminal conductors 21a are prevented from being dispersed.

The step of attaching the resin cover 50 to the plurality of slit covers 22a assembled such that the terminal conductors 21a are positionally aligned may be performed as follows. For example, the resin cover 50 may be attached to the plurality of slit covers 22a manually, and heated and thus melted to fix the terminal conductors 21a. Alternatively, an electric cable fixing device may be used that includes an attachment mechanism that grasps the resin cover 50 to attach the resin cover 50 to the slit covers 22a and a fixing mechanism (heating device) that heats and thus melts the resin cover 50 attached to the slit covers 22a. The electric cable fixing device may include a cooling mechanism that cools the melted resin cover 50.

Next, the six covered electric cables 20 having the six terminal conductors 21a fixed with the resin cover 50 by the electric cable disposing device 30 are set in the electric cable connection device 40 to join the six terminal conductors 21a together (joining step s4).

Specifically, as shown in FIG. 5(a) and FIG. 7(a), the terminal conductors 21a, of the covered electric cables 20, having the tip portions thereof fixed with the resin cover 50, are disposed on the anvil 41. As shown in FIG. 5(b) and FIG. 7(b), the restriction member 43 is moved in the width direction W, while the horn 42 is moved in the up-down direction Z. As a result, a predetermined pressure is caused to act on the six terminal conductors 21, while an ultrasonic vibration of the horn 42 is caused to realize ultrasonic joining of the terminal conductors 21a (joining step s4).

The terminal conductors 21a are fixed with the resin cover 50 fixing the slit covers 22a. Therefore, the ultrasonic joining of the six terminal conductors 21a is performed while the desired positional arrangement is kept with more certainty. As a result, the joined electric cable 10 including the resin cover 50 attached to a tip end thereof is produced (see FIG. 8).

In other words, the joined electric cable 10 includes the assembly of the plurality of covered electric cables 20 and the resin cover 50 fixing the tip portions of the plurality of terminal conductors 21a exposed from the covered electric cables 20 at the position near the tip ends thereof. The joined electric cable 10 also includes a terminal conductor-joined portion 11, at which the plurality of terminal conductors 21a fixed with the resin cover 50 are joined together.

As shown in FIG. 7(c) and FIG. 7(d), the tip portion of the joined body of the plurality of terminal conductors 21a of the joined electric cable 10 is cut off by a cutting tool D. As a result, the integral body of the plurality of slit covers 22a is removed together with the resin cover 50 (removal step s5). Thus, the conductor-joined electric cable 1 is produced.

As described above, the conductor-joined electric cable 1 is produced as a result of the tip portion of the joined electric cable 10 being cut off. A plurality of such conductor-joined electric cables 1 may be assembled into a bundle to form a wire harness, or such a conductor-joined electric cable 1 may be used as a part of a wire harness. In FIG. 7(d), the tip portion of the terminal conductors 21a of the joined electric cable 10 is cut off at a position in the vicinity of a tip end of the terminal conductor-joined portion 11. Alternatively, the tip portion of the terminal conductors 21a of the joined electric cable 10 may be cut off at a position, in the terminal conductors 21a, closer to the tip end of the joined electric cable 10 than the terminal conductor-joined portion 11.

As described above, the electric cable connection method connects the exposed terminal conductors 21a of the plurality of covered electric cables 20 such that the terminal conductors 21a are conductive. The electric cable connection method includes the assembly step s2 of assembling the covered electric cables 20, the fixing step s3 of fixing the terminal conductors 21a of the assembly of the plurality of covered electric cables 20 with the resin cover 50, and the joining step s4 of setting the plurality of covered electric cables 20 having the plurality of terminal conductors 21a fixed with the resin cover 50 in the electric cable connection device 40 and joining the plurality of terminal conductors 21a together.

The joined electric cable 10 includes the assembly of the plurality of covered electric cables 20 and the resin cover 50 fixing the tip portions of the plurality of terminal conductors 21a exposed from the covered electric cables 20 at the position near the tip ends thereof. The plurality of terminal conductors 21a fixed with the resin cover 50 are joined together. The resin cover 50 is a melt-curable member, which is cured after being melted.

In this manner, the terminal conductors 21a exposed from the insulating covers 22 are fixed with the resin cover 50 to prevent the terminal conductors 21a from being dispersed. Therefore, the terminal conductors 21a fixed while being assembled in a desired positional arrangement or a desired positional relationship are disposed in the electric cable connection device 40, and the terminal conductors 21a are connected together so as to establish conductivity. Thus, the conductor-joined electric cable 1 having a stable conductivity is produced.

The removal step s5 of removing the resin cover 50 is performed, so that the tip portion, of the joined body of the terminal conductors 21a, that is unnecessary is removed. The removal step s5 is not absolutely necessary, and may be performed when necessary.

The joining step s4 is performed before the removal step s5, so that the terminal conductors 21a assembled with the resin cover 50 are joined together while being disposed in the electric cable connection device 40. Therefore, the terminal conductors 21a in an assembled state with certainty are connected together so as to establish conductivity. Thus, the conductor-joined electric cable 1 having a stable conductivity is produced.

The resin cover 50 is a melt-curable member, which is cured after being melted. Therefore, the terminal conductors 21a are fixed with certainty with the resin cover 50, which is cured after being melted. Thus, the terminal conductors 21a are assembled easily and with certainty. This improves the work efficiency of the assembly step s2, and suppresses the movement of each of the terminal conductors 21a in the fixing step s3. Therefore, the conductor-joined electric cable 1 having a stable conductivity is produced more efficiently.

The covered electric cable according to the present invention corresponds to the covered electric cable 20 in the above-described embodiment, and in a similar manner,
the terminal conductor corresponds to the terminal conductor 21a;
the assembly step corresponds to the assembly step s2;
the fixing member corresponds to the resin cover 50;
the fixing step corresponds to the fixing step s3;
the joining device corresponds to the electric cable connection device 40;
the joining step corresponds to the joining step s4;
the removal step corresponds to the removal step s5;
the insulating cover corresponds to the insulating cover 22;
the semi-strip step corresponds to the semi-strip step s1; and
the joined electric cable corresponds to the joined electric cable 10.

However, the present invention is not limited to the structure of the above-described embodiment, and may be carried out in any of many other embodiments.

Hereinafter, other embodiments will be described.

In the embodiments described below, elements having the same structure or same function will bear the same reference signs, and descriptions thereof will be omitted. The specifics described in each of the embodiments are not intended to be applicable only to the corresponding embodiment, but those specifics may be combined in any way in which the intended effects are provided.

For example, in the above-described embodiment, the electric cable connection device 40 is used to perform ultrasonic joining of the terminal conductors 21a. The method is not limited to any specific method and may be any method as long as the terminal conductors 21a are joined together. For example, laser welding or the like that uses a high energy beam, or resistance welding that uses an electrode, may be used to join the terminal conductors 21a together.

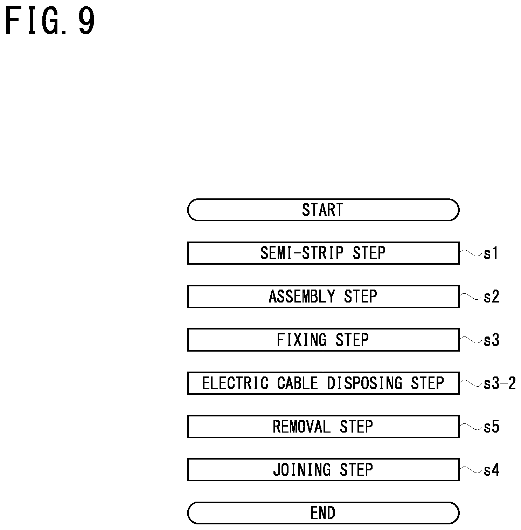

For example, in the above-described embodiment, the removal step s5 of removing the resin cover 50 fixing the terminal conductors 21a is performed after the joining step s4 of joining the terminal conductors 21a together by use of the electric cable connection device 40. Alternatively, as shown in, for example, the flowchart in FIG. 9, the removal step s5 may be performed before the joining step s4.

According to this method, the resin cover 50 is attached to the slit covers 22a of the covered electric cables 20 disposed in the electric cable disposing device 30 to fix the slit covers 22a (fixing step s3), and after this, the assembly of the plurality of covered electric cables 20 is disposed on the anvil 41 (electric cable disposing step s3-2). Then, for example, the terminal conductors 21a are cut at a position closer to the base ends of the covered electric cables 20 than the resin cover 50 to remove the resin cover 50 (removal step s5). After this, the electric cable connection device 40 is used to perform ultrasonic joining of the terminal conductors 21a (joining step s4).

In this manner, the removal step s5 is performed before the joining step s4, so that the terminal conductors 21a are connected together so as to establish conductivity with no risk of the electric cable connection device 40 for interfering with the resin cover 50. Therefore, the mental burden of a worker who disposes the assembly of the plurality of covered electric cables 20 on the anvil 41 is alleviated, and the conductor-joined electric cable 1 is produced stably.

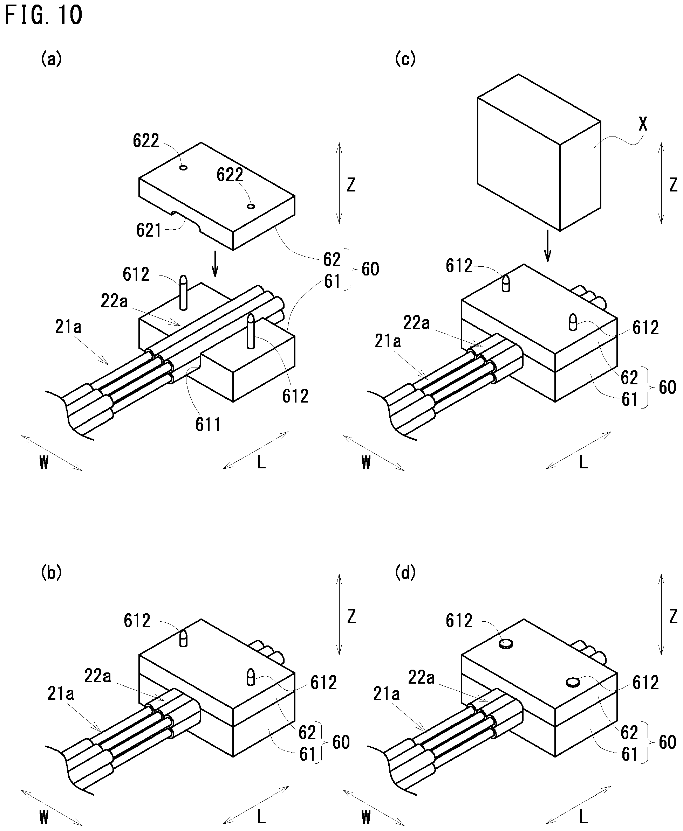

In the above-described embodiment, the resin cover 50 is attached to the slit covers 22a to fix the terminal conductors 21a. Alternatively, as shown in, for example, FIG. 10 through FIG. 14, the plurality of terminal conductors 21a may be fixed with a member other than the resin cover 50.

Hereinafter, other methods for fixing the terminal conductors 21a will be briefly described with reference to FIG. 10 through FIG. 14.

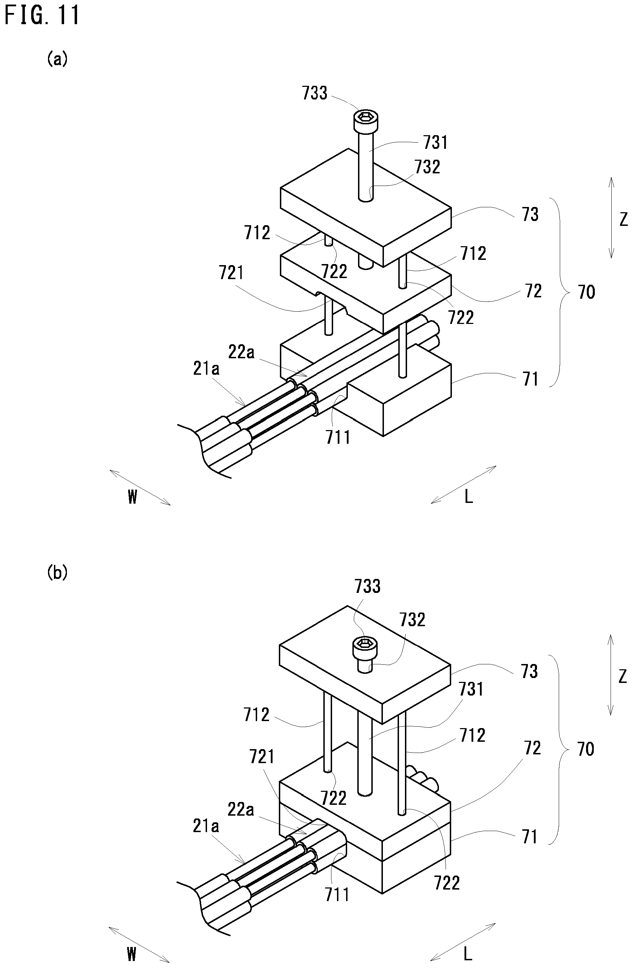

FIG. 10 includes schematic perspective views showing a method of fixing the terminal conductors 21a with a first fixing member 60. FIG. 11 includes schematic perspective views showing a method of fixing the terminal conductors 21a with a second fixing member 70.

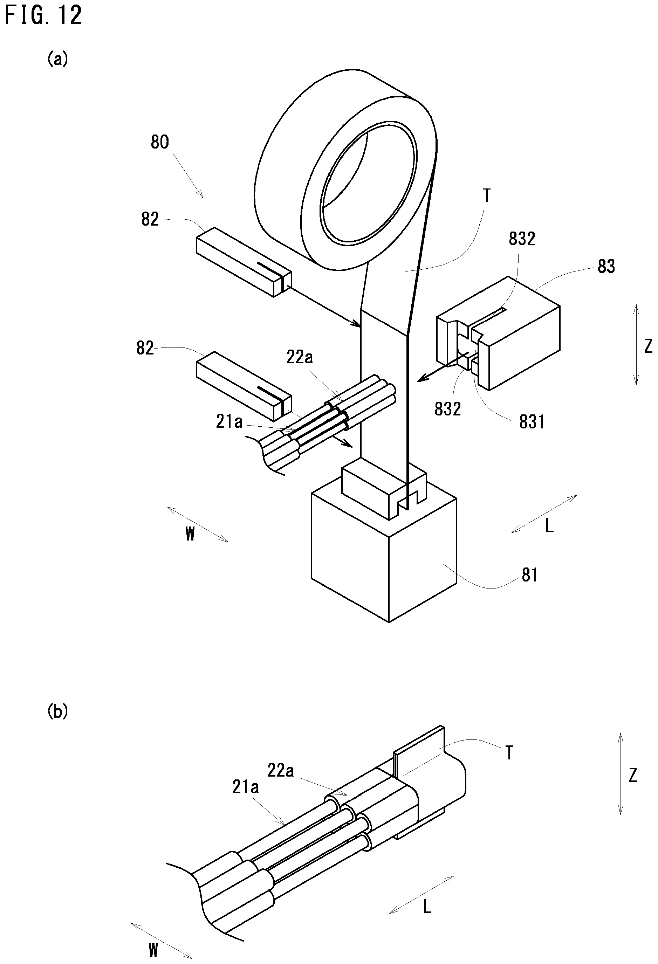

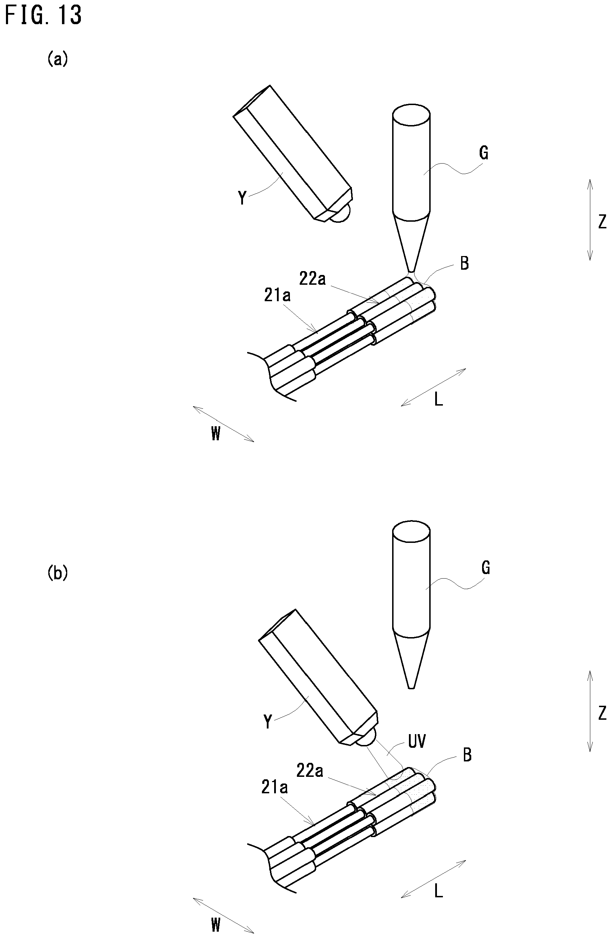

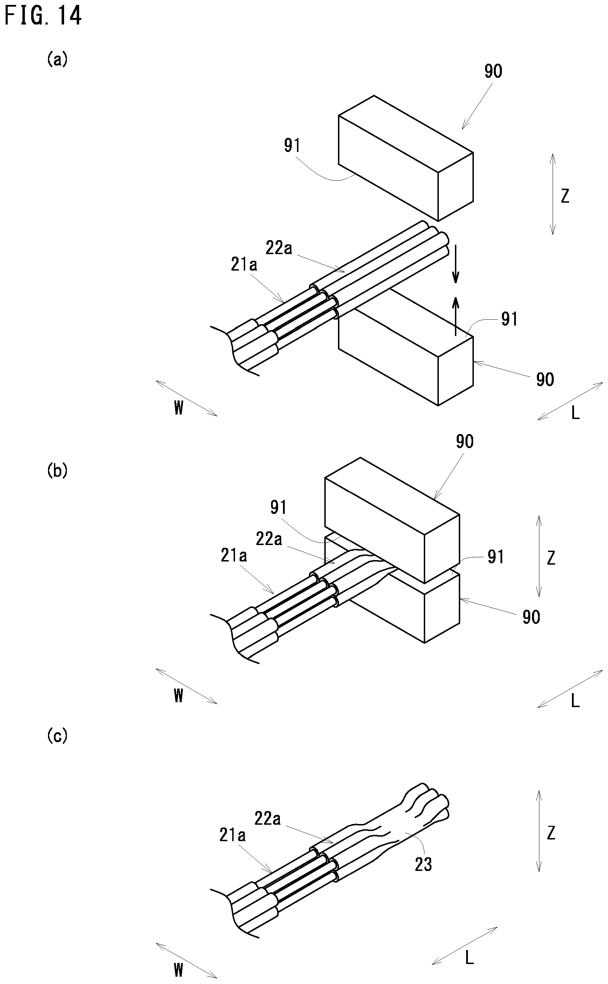

FIG. 12 includes schematic perspective views showing a method of fixing the terminal conductors 21a with a tape T. FIG. 13 includes schematic perspective views showing a method of fixing the terminal conductors 21a with an ultraviolet-curable resin B. FIG. 14 includes schematic perspective views showing a method of fixing the terminal conductors 21a with the slit covers 22a.

As shown in, for example, FIG. 10 and FIG. 11, a fixing member other than the resin cover 50 (the first fixing member 60 or the second fixing member 70) may be attached to the tip ends of the slit covers 22a to fix the plurality of terminal conductors 21a (fixing step s3).

Hereinafter, the first fixing member 60 will be described.

As shown in FIG. 10(a), the first fixing member 60 includes a bottom member 61 and a top member 62 that may be combined together in the up-down direction Z.

The bottom member 61 has a substantially column-like shape that is rectangular as seen in a plan view. The bottom member 61 includes a bottom-side carrying recessed portion 611, in which the slit covers 22a may be disposed, formed in a center area of a top surface thereof, and also includes a pair of protrusions 612 protruding upward.

The bottom-side carrying recessed portion 611 is a groove formed by the center area of the top surface being recessed in the longitudinal direction L, and allows the plurality of slit covers 22a to be disposed therein.

The protrusions 612 are generally cylindrical protrusions that are each tapered out at a tip end thereof. The pair of protrusions 612 are aligned in the width direction W while having the bottom-side carrying recessed portion 611 therebetween. The protrusions 612 are formed of a thermoplastic resin, and are deformable by being heated.

The top member 62 has a substantially column-like shape that is rectangular as seen in a plan view, like the bottom member 61, and has a height (length in the up-down direction Z) lower than a height (length in the up-down direction Z) of the protrusions 612. The top member 62 includes a top-side carrying recessed portion 621 facing the bottom-side carrying recessed portion 611 in a state where the top member 62 is combined with the bottom member 61, and also includes insertion holes 622, through which the protrusions 612 are insertable.

The top-side carrying recessed portion 621 is a groove formed by a center area of a bottom surface of the top member 62 being recessed in the longitudinal direction L. In the state where the bottom member 61 and the top member 62 are combined together, the top-side carrying recessed portion 621 and the bottom-side carrying recessed portion 611 sandwich and hold the plurality of slit covers 22a.

The insertion holes 622 are cylindrical through-holes running throughout the top member 62 in the up-down direction Z. The insertion holes 622 are located at positions facing the protrusions 612 in the state where the bottom member 61 and the top member 62 are combined together. The insertion holes 622 each have an inner diameter that is substantially equal to an outer diameter of each of the protrusions 612.

The first fixing member 60 having such a structure operates as follows. In the semi-strip step s1, the tip portions of the insulating covers 22 are moved, as the slit covers 22a, in a direction toward the tip ends thereof. Then, in a state where the slit covers 22a are disposed in the bottom-side carrying recessed portion 611 (see FIG. 10(a)), the protrusions 612 are inserted into the insertion holes 622. As a result, the top member 62 and the bottom member 61 are combined together (see FIG. 10(b)).

A high-temperature pressing member X is pressed from above onto a top surface of the top member 62 (see FIG. 10(c)). As a result, the top ends of the protrusions 612 formed of a thermoplastic resin are deformed to be disc-shaped. Thus, the bottom member 61 and the top member 62 are fixed to each other (see FIG. 10(d)).

As a result, the bottom-side carrying recessed portion 611 and the top-side carrying recessed portion 621 sandwich the plurality of slit covers 22a, and the plurality of slit covers 22a are held as an integral body. In this manner, the first fixing member 60 fixes the plurality of terminal conductors 21a, like the resin cover 50.

In this embodiment, the tip portions of the insulating covers 22 of the covered electric cables 20 are cut off. The slit covers 22a, which are shifted by a predetermined length in the longitudinal direction L in a direction toward the tip ends thereof, are held by the first fixing member 60, and thus the terminal conductors 21a are fixed. Alternatively, for example, the tip portions of the insulating covers 22 of the covered electric cables 20 may be cut off and removed from the tip portions of the conductors 21, and then, the exposed portions of the conductors 21 may be directly held by the first fixing member 60. In this manner also, the terminal conductors 21a are fixed.

As shown in FIG. 11, the plurality of terminal conductors 21a may be fixed with the second fixing member 70, instead of the resin cover 50 or the first fixing member 60.

The second fixing member 70 includes a base member 71, a movable member 72 movable in the up-down direction Z with respect to the base member 71, and a top member 73 located above the movable member 72.

The base member 71 has a substantially column-like shape that is rectangular as seen in a plan view, like the bottom member 61. The base member 71 includes a bottom-side carrying recessed portion 711, in which the slit covers 22a may be disposed, formed in a center area of a top surface thereof, and also includes a pair of support columns 712 protruding upward.

The bottom-side carrying recessed portion 711 is a groove formed by the center area of the top surface being recessed in the longitudinal direction L, and allows the plurality of slit covers 22a to be disposed therein.

The support columns 712 are generally cylindrical and stand on a top surface of the base member 71. The pair of support columns 712 are aligned in the width direction W while having the bottom-side carrying recessed portion 711 therebetween. Top ends of the support columns 712 are fixed to a bottom surface of the top member 73.

The movable member 72 has a substantially column-like shape that is rectangular as seen in a plan view, like the bottom member 71. The movable member 72 includes a top-side carrying recess portion 721 facing the bottom-side carrying recessed portion 711 in a state where the movable member 72 and the base member 71 are combined together, and also includes insertion holes 722, through which the support columns 712 are insertable.

The top-side carrying recessed portion 721 is a groove formed by a center area of a bottom surface of the movable member 72 being recessed in the longitudinal direction L. In the state where the base member 71 and the movable member 72 are combined together, the top-side carrying recessed portion 721 and the bottom-side carrying recessed portion 711 sandwich and hold the plurality of slit covers 22a.

The insertion holes 722 are cylindrical through-holes running throughout the movable member 72 in the up-down direction Z. The support columns 712 are inserted into the insertion holes 722.

The top member 73 has a substantially column-like shape that is rectangular as seen in a plan view. The top ends of the support columns 712 are fixed to the top member 73. The top member 73 includes an operation member 731 operating the movement of the movable member 72 in the up-down direction Z and a screw hole 732, into which the operation member 731 is insertable.

The operation member 731 is a cylindrical body having a thread formed on an outer circumferential surface thereof. A bottom end of the operation member 731 is rotatably secured to a top surface of the movable member 72. The movable member 72 is movable in the up-down direction Z along with the movement of the operation member 731 in the up-down direction Z. The operation member 731 has a driving member 733 provided at a top end thereof.

The screw hole 732 is engageable with the operation member 731, which runs throughout a center area of the top member 73. The driving member 733 drives and rotates the operation member 731 to move the operation member 731 in the up-down direction Z.

The second fixing member 70 having such a structure operates as follows. In the semi-strip step s1, the insulating covers 22, namely, the slit covers 22a, are moved in a direction toward the tip ends thereof. Then, in a state where the slit covers 22a are disposed in the bottom-side carrying recessed portion 711 (see FIG. 11(a)), the driving member 733 drives and rotates the operation member 731 to move the movable member 72 in the up-down direction Z. As a result, the movable member 72 and the base member 71 are combined together (see FIG. 11(b)).

In this manner, the bottom-side carrying recessed portion 711 and the top-side carrying recessed portion 721 sandwich the plurality of slit covers 22a, and the plurality of slit covers 22a are held as an integral body. In this manner, the second fixing member 70 fixes the plurality of terminal conductors 21a, like the resin cover 50.

In this embodiment, the tip portions of the insulating covers 22 of the covered electric cables 20 are cut off. The slit covers 22a, which are shifted by a predetermined length in the longitudinal direction L in a direction toward the tip ends thereof, are held by the second fixing member 70, and thus the terminal conductors 21a are fixed. Alternatively, for example, the tip portions of the insulating covers 22 of the covered electric cables 20 may be cut off and removed from the tip portions of the conductors 21, and then, the exposed portions of the conductors 21 may be directly held by the second fixing member 70. In this manner also, the terminal conductors 21a are fixed.

As shown in FIG. 12, a taping device 80 may be used, instead of the resin cover 50, to tape the tip portions of the slit covers 22a with a tape T, which is a pressure-sensitive adhesive tape. In this manner, the plurality of terminal conductors 21a are fixed.

The taping device 80, which pasts the tape T on the tip portions of the insulating covers 22, includes a tape holding member 81 holding the tape T such that main surfaces of the tape T are directed in the longitudinal direction L, cutting members 82 cutting the tape T, and a pasting member 83 pasting the tape T on the slit covers 22a.

The tape holding member 81 holds one end of the tape T such that an adhesive surface, among the main surfaces of the tape T, is directed toward the base ends of the covered electric cables 20 in the longitudinal direction L.

The cutting members 82 are rectangular parallelepiped members movable in the width direction W, and each include a cutter cutting the tape T in the width direction W. As shown in FIG. 12(a), two cutting members 82 are aligned in the up-down direction Z while having the slit covers 22a therebetween.

The pasting member 83 is a rectangular parallelepiped member movable in the longitudinal direction L, and includes a tip accommodation portion 831 accommodating the tip portions of the slit covers 22a and folding portions 832 folding a top end and a bottom end of the tape T after the tape T is cut.

The tip accommodation portion 831 is a recessed portion formed in a center portion of the pasting member 83 and has substantially the same shape as that of the tip portions of the plurality of slit covers 22a. The tip accommodation portion 831 is opened toward the base ends of the covered electric cables 20 in the longitudinal direction L.

The folding portions 832 are cut-out portions formed above and below the tip accommodation portion 831 and extend in the longitudinal direction L. The folding portions 832 are slightly thicker than the tape T.

Now, a method for pasting the tape T to the tip portions of the plurality of slit covers 22a by use of the tapering device 80 having such a structure will be described with reference to FIG. 12.

First, the tape T is held by the tape holding member 81 such that the adhesive surface of the tape T is directed toward the base ends of the covered electric cables 20 in the longitudinal direction L, and the tip ends of the slit covers 22a are put into contact with the adhesive surface of the tape T. Next, the cutting members 82 are moved in the width direction W to cut the tape T at positions above and below the slit covers 22a, and the pasting member 83 is moved toward the base ends of the covered electric cables 20 in the longitudinal direction L.

As a result, the tip portions of the slit covers 22a having the tape T pasted thereto are accommodated in the tip accommodation portion 831, and the tape T is pasted on a top surface, a bottom surface and two side surfaces, in the width direction W, of the slit covers 22a. Parts of the tape T are guided into the folding portions 832, so that the adhesive surfaces of the tape T are pasted to each other at positions above and below the slit covers 22a.

As a result, the tape T is pasted to the tip portions of the slit covers 22a, and thus the plurality of slit covers 22a are held as an integral body. In this manner, the plurality of terminal conductors 21a are fixed with the tape T, like with the resin cover 50 (see FIG. 12(b)).

In this embodiment, the tip portions of the insulating covers 22 of the covered electric cables 20 are cut off. The tape T is pasted to the slit covers 22a, which are shifted by a predetermined length in the longitudinal direction L in a direction toward the tip ends thereof, and thus the terminal conductors 21a are fixed. Alternatively, for example, the tip portions of the insulating covers 22 of the covered electric cables 20 may be cut off and removed from the tip portions of the conductors 21, and then, the tape T may be pasted on the exposed portions of the conductors 21. In this manner also, the terminal conductors 21a are fixed.

As shown in FIG. 13, the ultraviolet-curable resin B may be applied to the slit covers 22a from a tip end of a resin application device G (see FIG. 13(a)), and the ultraviolet-curable resin B may be irradiated with ultraviolet rays UV from an ultraviolet ray radiation device Y. In this manner also, the terminal conductors 21a are fixed (see FIG. 13(b)).

This method, too, allows the tip portions of the plurality of slit covers 22a to be fixed with the ultraviolet-curable resin B, and thus the plurality of slit covers 22a are held as an integral body. In this manner, the plurality of terminal conductors 21a are fixed, like with the resin cover 50.

In this embodiment, the tip portions of the insulating covers 22 of the covered electric cables 20 are cut off. The ultraviolet-curable resin B is applied to the slit covers 22a, which are shifted by a predetermined length in the longitudinal direction L in a direction toward the tip ends thereof, and the ultraviolet rays UV are radiated from the ultraviolet ray radiation device Y. Alternatively, for example, the tip portions of the insulating covers 22 of the covered electric cables 20 may be cut off and removed from the tip portions of the conductors 21, and then, the ultraviolet-curable resin B may be applied to the exposed portions of the conductors 21 and irradiated with the ultraviolet rays UV from the ultraviolet ray radiation device Y.

As shown in FIG. 14, the insulating covers 22 may be formed of a thermoplastic resin, which is a melt-curable material. The plurality of slit covers 22a are shifted in a direction toward the tip ends thereof, and then, the slit covers 22a, which are closer to the tip ends of the covered electric cables 20 than the terminal conductors 21a, may be welded to be fixed. In this manner also, the terminal conductors 21a are fixed.

Hereinafter, a method for welding and thus fixing the slit covers 22a will be described with reference to FIG. 14.

First, in the semi-strip step s1, the tip portions of the insulating covers 22 are moved, as the slit covers 22a, in a direction toward the tip ends thereof. In this state, the terminal conductors 21a are not inserted to the tip portions of the slit covers 22a. Heating devices 90 each have a facing surface 91, which faces the slit covers 22a, and allow the facing surfaces 91 to have a high temperature. The heating devices 90 are located above and below the tip portions of the slit covers 22a (see FIG. 14(a)).

Next, the heating devices 90 are moved in the up-down direction Z such that the heated facing surfaces 91 approach the slit covers 22a. The facing surfaces 91 having a high temperature are put into contact with the slit covers 22a, and are pressed against the slit covers 22a for a predetermined time period (see FIG. 14(b)). As a result, the slit covers 22a in contact with the facing surfaces 91 of the heating devices 90 are melted.

The heating devices 90 are moved in the up-down direction Z such that the facing surfaces 91 are separated away from the slit covers 22a. Thus, the melted slit covers 22a are naturally cooled and cured. As a result, a welded portion 23, in which the plurality of slit covers 22a are fixed as an integral body, is formed. Thus, the plurality of slit covers 22a are provided as an integral body (see FIG. 14(c)). In this manner, the terminal conductors 21a are fixed with the slit covers 22a.

As described above, the insulating covers 22 welded and fixed may be used as a melt-curable member. In this case, the semi-strip step s1 is performed before the fixing step s3. In the semi-strip step s1, the portions, of the insulating covers 22, having a length corresponding to that of the exposed conductors of the covered electric cables 20 are cut off from the base-side portions of the insulting covers 22, and shifted in a direction toward the tip ends thereof. In the fixing step s3, the tip portions of the shifted portions of the insulating covers 22 may be welded and fixed.

As a result, the step required to expose the terminal conductors 21a to be joined together is performed in the semi-strip step s1, and the semi-strip step s1 is made a part of the fixing step s3. Therefore, as compared with the case where, for example, the terminal conductors 21a are covered with the resin cover 50 and fixed after the insulating covers 22 are cut, the amount of work in the fixing step s3 is decreased. This improves the production efficiency of the conductor-joined electric cable 1.

The portions, of the insulating covers 22, that are to be discarded after the terminal conductors 21a are exposed, are used to fix the terminal conductors 21a. Therefore, the terminal conductors 21a are assembled and fixed efficiently with no use of another element, and the element to be discarded is effectively used.

The portions, of the insulating covers 22, that are removed in the removal step s5 are welded to be fixed and assembled. This prevents a situation where tiny pieces of the element to be discarded are scattered.

In the above-described embodiments, the tip portions of the insulating covers 22 are moved in the longitudinal direction L in a direction toward the tip ends thereof, such that the tip portions of the insulating covers 22 cover the tip portions of the conductors 21. The slit covers 22a do not need to be provided at the tip ends of the terminal conductors 21a. For example, the slit covers 22a may be removed from the tip portions of the conductors 21. In other words, the resin cover 50 or the like may be attached around the tip portions of the conductors 21, after the slit covers 22a are removed from the conductors 21, to fix the tip portions of the conductors 21 (the terminal conductors 21a).

In the above-described embodiments, the resin cover 50, the first fixing member 60 or the like is used as a fixing member that fixes the plurality of terminal conductors 21a. Alternatively, a metal member may be used to cover and fix the assembly of the terminal conductors 21a, or a pharmaceutical drug may be used such that, for example, the pharmaceutical drug is applied to the terminal conductors 21a or the terminal conductors 21a are immersed in the pharmaceutical drug.

In the removal step s5, a part, of the joined portion of the terminal conductors 21a, that is cut off includes the resin cover 50 as a fixing member. Alternatively, the portions, of the terminal conductors 21a, that are closer to the tip end thereof than the terminal conductor-joined portion 11 may be cut off in a non-joined state to remove the fixing member. Still alternatively, only the fixing member may be removed.

In the removal step s5, the terminal conductors 21a in a non-joined state may be dissolved in a tip portion of the terminal conductor-joined portion 11, or at a position closer to the tip ends of the terminal conductors 21a than the terminal conductor-joined portion 11, to remove the fixing member.

In the above-described embodiments, regarding the movement of the joined electric cable 10 or the bundle of the covered electric cables 20 between the electric cable disposing device 30 and the electric cable connection device 40 or between the electric cable connection device 40 and the cutting device including the cutting tool D, the joined electric cable 10 or the bundle of the covered electric cables 20 may be moved by an automatic transportation device such as a robot or the like, or may be carried by a human. Alternatively, the joined electric cable 10 or the bundle of the covered electric cables 20 may be moved by an automatic transportation device only between specific devices, and may be carried by a human between the other devices.

### REFERENCE SIGNS LIST

- 10: Joined electric cable
- 20: Covered electric cable
- 21a: Terminal conductor
- 22: Insulating cover
- 22a: Slit cover
- 23: Welded portion
- 40: Electric cable connection device
- 50: Resin cover
- 60: First fixing member
- 70: Second fixing member
- B: Ultraviolet-curable resin
- T: Tape
- s1: Semi-strip step
- s2: Assembly step
- s3: Fixing step
- s4: Joining step
- s5: Removal step

## Claims

1. An electric cable connection method for connecting exposed terminal conductors (21a) of a plurality of covered electric cables (20) so as to establish conductivity, the electric cable connection method comprising:
an assembly step (s2) of assembling the covered electric cables (20);
a fixing step (s3) of fixing the terminal conductors (21a) of the assembly of the plurality of electric cables (20) with a fixing member (50, 60, 70, T, B, 22); and
a joining step (s4) of setting the plurality of covered electric cables (20) having the plurality of terminal conductors (21a) fixed with the fixing member in a joining device (40), and joining the plurality of exposed terminal conductors (21a);
wherein
the electric cable connection method further comprises a semi-strip step (s1), performed before the fixing step (s3), of cutting insulating covers (22) such that portions, of the insulating covers (22), having a length at least equal to that of the exposed terminal conductors (21a) of the covered electric cables (20) are separated from the remaining portions of the insulating covers (22) and shifting the separated portions of the insulating covers (22) in a direction toward tip ends thereof such that the shifted portions of the insulating covers (22) are closer to tip ends of the covered electric cables (20) than the terminal conductors (21a), **characterized in that**: the fixing member (50, T, B, 22) is a melt-curable member that is curable after being melted;
wherein the fixing step (s3) includes a step of welding and fixing the shifted portions of the insulating covers (22), and
the portions, of the insulating covers (22), that are welded and fixed are used as the melt-curable member.

2. The electric cable connection method according to claim 1, further comprising a removal step (s5) of removing the fixing member (22).

3. The electric cable connection method according to claim 2, wherein the removal step (s5) is performed before the joining step (s4).

4. The electric cable connection method according to claim 2, wherein the joining step (s4) is performed before the removal step (s5).

5. A joined electric cable (10), comprising:
a plurality of covered electric cables (20) that are assembled together; and
a fixing member (50, 60, 70, T, B, 22) fixing tip portions, of a plurality of terminal conductors (21a), exposed from the covered electric cables (20) at a position near the tip ends thereof,
wherein:
the plurality of terminal conductors (21a) fixed with the fixing member (50, 60, 70, T, B, 22) are joined together,
wherein
insulating covers (22) of the electric cables (20) are cut such that portions, of the insulating covers (22), having a length at least equal to that of the terminal conductors (21a) of the covered electric cables (20) are separated from the remaining portions of the insulating covers (22) and the separated portions of the insulating covers (22) are shifted in a direction toward tip ends thereof such that the shifted portions of the insulating covers (22) are closer to tip ends of the covered electric cables (20) than the terminal conductors (21a), **characterized in that**:the fixing member (50, T, B, 22) is a melt-curable member that is curable after being melted;
wherein the shifted portions of the insulating covers (22) are welded and fixed, and
the portions, of the insulating covers (22), that are welded and fixed are used as the melt-curable member.

6. An electric cable fixing device (30) usable to produce a joined electric cable (10), the joined electric cable (10) including a plurality of covered electric cables (20) and a fixing member (50, 60, 70, T, B 22) fixing tip portions, of a plurality of terminal conductors (21a), exposed from the plurality of covered electric cables (20) at a position near tip ends thereof, the plurality of terminal conductors (21a) fixed with the fixing member (50, 60, 70 T, B, 22) being joined together,
the electric cable electric cable fixing device (30) comprising a fixing mechanism for fixing the terminal conductors (21a) in an assembled state with the fixing member (50, 60, 70, T, B) the fixing mechanism is configured:
to cut a plurality of insulating covers (22) such that portions, of the plurality of insulating covers (22), having a length at least equal to that of the terminal conductors (21a) of the covered electric cables (20) are separated from the remaining portions of the insulating covers (22), the separated portions of the insulating covers (22) being shifted in a direction toward tip ends thereof, and
to attach the fixing member (50, 60, 70, T, B) to the shifted portions of the plurality of insulating covers (22) and fix the shifted portions of the insulating covers (22),
**characterized in that** the fixing member (50, 60, 70, T, B) is attached to the shifted portions of the plurality of insulating covers (22) in a state in which the exposed terminal conductors (21a) are not yet joined together.

7. The electric cable fixing device according to claim 6, wherein:
the fixing member (50, 60, 70, T, B) is formed of a pressure-sensitive adhesive tape (T), and
the fixing mechanism includes a taping device (80) for pasting the fixing member (50, 60, 70, T, B) to the tip portions of the terminal conductors (21a) to fix the terminal conductors (21a).

8. The electric cable fixing device according to claim 7, wherein:
the fixing member (B) is formed of an ultraviolet-curable resin (B) curable by being irradiated with ultraviolet rays, and
the fixing mechanism includes:
a resin application device for applying the fixing member (B) to the tip portions of the terminal conductors (21a), and
an ultraviolet radiation device for radiating the ultraviolet rays toward the tip portions of the terminal conductors (21a) having the fixing member (B) applied thereto.

9. The electric cable fixing device according to claim 6, wherein:
the fixing member (50) is a melt-curable member curable after being melted, and
the fixing mechanism includes a heating device (90) for melting the fixing member (50).

10. An electric cable fixing device (30) usable to produce a joined electric cable (10), the joined electric cable (10) including a plurality of covered electric cables (20) and a fixing member (50, 60, 70, T, T, B, 22) fixing tip portions, of a plurality of terminal conductors (21a), exposed from the plurality of covered electric cables (20) at a position near tip ends thereof, the plurality of terminal conductors (21a) fixed with the fixing member (50, 60, 70, T, B, 22) being joined together,
the electric cable electric cable fixing device (30) comprising a fixing mechanism for fixing the terminal conductors (21a) in an assembled state with the fixing member (50, 60, 70, T, B, 22),
**characterized in that** the fixing mechanism includes a heating device, the heating device being configured:
to cut a plurality of insulating covers (22) such that portions, of a plurality of insulating covers (22), having a length at least equal to that of the terminal conductors (21a) of the covered electric cables (20) are separated from the remaining portions of the insulating covers (22), the separated portions of the insulating covers (22) being shifted in a direction toward tip portions thereof, and
to melt the shifted portions of the plurality of insulating covers (22) such that the shifted portions are used as a melt-curable member curable after being melted.

11. A joined electric cable (10) production device for producing a joined electric cable (10), the joined electric cable (10) including a plurality of covered electric cables (20) and a fixing member (50, 60, 70, T, B, 22) fixing tip portions, of a plurality of terminal conductors (21a), exposed from the plurality of covered electric cables (20) at a position near tip ends thereof, the plurality of terminal conductors (21a) fixed with the fixing member (50, 60, 70, T, B, 22) being joined together,
the joined electric cable (10) production device comprising:
an electric cable disposing device (30) for disposing the plurality of covered electric cables (20);
an electric cable connection device (40) for connecting the plurality of terminal conductors (21a); and
the electric cable fixing device according to any one of claims 6 through 10.

## Patentansprüche

1. Elektrisches Kabelverbindungsverfahren zum Verbinden freiliegender Anschlussleiter (21a) von mehreren ummantelten elektrischen Kabeln (20), um Leitfähigkeit herzustellen, wobei das elektrische Kabelverbindungsverfahren Folgendes umfasst:
einen Zusammenstellschritt (s2) des Zusammenstellens der ummantelten elektrischen Kabel (20);
einen Befestigungsschritt (s3) des Befestigens der Anschlussleiter (21a) der zusammengestellten elektrischen Kabel (20) mit einem Befestigungselement (50, 60, 70, T, B, 22); und
einen Verbindungsschritt (s4) des Einsetzens der mehreren ummantelten elektrischen Kabel (20), die die mehreren Anschlussleiter (21a) aufweisen, die mit dem Befestigungselement befestigt sind, in eine Verbindungsvorrichtung (40) und des Verbindens der mehreren freiliegenden Anschlussleiter (21a);
wobei
das elektrische Kabelverbindungsverfahren ferner einen Teilabisolierschritt (s1) umfasst, der vor dem Befestigungsschritt (s3) durchgeführt wird, wobei isolierende Ummantelungen (22) derart geschnitten werden, dass Abschnitte der isolierenden Ummantelungen (22), die eine Länge aufweisen, die mindestens gleich der der freiliegenden Anschlussleiter (21a) der ummantelten elektrischen Kabel (20) ist, von den verbleibenden Abschnitten der isolierenden Ummantelungen (22) getrennt werden, und die getrennten Abschnitte der isolierenden Ummantelungen (22) in einer Richtung zu ihren Vorderenden hin geschoben werden, so dass die verschobenen Abschnitte der isolierenden Ummantelungen (22) näher an den Vorderenden der ummantelten elektrischen Kabel (20) sind als die Anschlussleiter (21a), **dadurch gekennzeichnet, dass**: das Befestigungselement (50, 60, 70, T, B, 22) ein schmelzhärtenden Element ist, das nach Schmelzung aushärtbar ist;
wobei der Befestigungsschritt (s3) einen Schritt des Schweißens und Befestigens der verschobenen Abschnitte der isolierenden Ummantelungen (22) umfasst, und
die Abschnitte der isolierenden Ummantelungen (22), die geschweißt und befestigt werden, als das schmelzhärtende Element verwendet werden.

2. Elektrisches Kabelverbindungsverfahren nach Anspruch 1, das ferner einen Entfernungsschritt (s5) zum Entfernen des Befestigungselements (22) umfasst.

3. Elektrisches Kabelverbindungsverfahren nach Anspruch 2, wobei der Entfernungsschritt (s5) vor dem Verbindungsschritt (s4) durchgeführt wird.

4. Elektrisches Kabelverbindungsverfahren nach Anspruch 2, wobei der Verbindungsschritt (s4) vor dem Entfernungsschritt (s5) durchgeführt wird.

5. Verbundenes elektrisches Kabel (10), das Folgendes aufweist:
mehrere ummantelte elektrische Kabel (20), die zusammengestellt sind; und
ein Befestigungselement (50, 60, 70, T, B, 22), das Vorderabschnitte von mehreren Anschlussleitern (21a), die von den ummantelten elektrischen Kabeln (20) freiliegen, an einer Position nahe den Vorderenden davon befestigt,
wobei:
die mehreren Anschlussleiter (21a), die mit dem Befestigungselement (50, 60, 70, T, B, 22) befestigt sind, miteinander verbunden sind,
wobei
isolierende Ummantelungen (22) der elektrischen Kabel (20) derart geschnitten werden, dass Abschnitte der isolierenden Ummantelungen (22), die eine Länge aufweisen, die mindestens gleich der der Anschlussleiter (21a) der ummantelten elektrischen Kabel (20) ist, von den verbleibenden Abschnitten der isolierenden Ummantelungen (22) getrennt sind, und die getrennten Abschnitte der isolierenden Ummantelungen (22) in einer Richtung zu ihren Vorderenden hin geschoben sind, so dass die verschobenen Abschnitte der isolierenden Ummantelungen (22) näher an den Vorderenden der ummantelten elektrischen Kabel (20) sind als die Anschlussleiter (21a), **dadurch gekennzeichnet, dass**: das Befestigungselement (50, 60, 70, T, B, 22) ein schmelzhärtendes Element ist, das nach Verflüssigung aushärtbar ist;
wobei die verschobenen Abschnitte der isolierenden Ummantelungen (22) durch Schweißen befestigt sind, und
die Abschnitte der isolierenden Ummantelungen (22), die dursch Schweißen befestigt sind, als das schmelzhärtende Element verwendet werden.

6. Elektrische Kabelbefestigungsvorrichtung (30), die zum Herstellen eines verbundenen elektrischen Kabels (10) verwendbar ist, wobei das verbundene elektrische Kabel (10) mehrere ummantelte elektrische Kabel (20) und ein Befestigungselement (50, 60, 70, T, B, 22) umfasst, das Vorderabschnitte von mehreren Anschlussleitern (21a), die von den mehreren ummantelten elektrischen Kabeln (20) freiliegen, an einer Position nahe den Vorderenden davon befestigt, wobei die mehreren Anschlussleiter (21a), die mit dem Befestigungselement (50, 60, 70, T, B, 22) befestigt sind, miteinander verbunden sind,
wobei die elektrische Kabelbefestigungsvorrichtung (30) einen Befestigungsmechanismus zum Befestigen der Anschlussleiter (21a) in einem zusammengestellten Zustand mit dem Befestigungselement (50, 60, 70, T, B, 22) aufweist,
wobei der Befestigungsmechanismus eingerichtet ist:
mehrere isolierende Ummantelungen (22) derart zu schneiden, dass Abschnitte der mehreren isolierenden Ummantelungen (22), die eine Länge aufweisen, die mindestens gleich der der Anschlussleiter (21a) der ummantelten elektrischen Kabel (20) ist, von den verbleibenden Abschnitten der isolierenden Ummantelungen (22) getrennt werden, wobei die getrennten Abschnitte der isolierenden Ummantelungen (22) in einer Richtung zu ihren Vorderenden hin verschoben werden, und
das Befestigungselement (50, 60, 70, T, B) an den verschobenen Abschnitten der mehreren isolierenden Ummantelungen (22) anzubringen und die verschobenen Abschnitte der isolierenden Ummantelungen (22) zu befestigen,
**dadurch gekennzeichnet, dass** das Befestigungselement (50, 60, 70, T, B) an den verschobenen Abschnitten der mehreren isolierenden Ummantelungen (22) in einem Zustand angebracht wird, in dem die freiliegenden Anschlussleiter (21a) noch nicht miteinander verbunden sind.

7. Befestigungsvorrichtung für elektrische Kabel nach Anspruch 6, wobei:
das Befestigungselement (50, 60, 70, T, B) aus einem druckempfindlichen Klebeband (T) gebildet ist, und
der Befestigungsmechanismus eine Klebebandvorrichtung (80) zum Ankleben des Befestigungselements (50, 60, 70, T, B) an die Vorderabschnitte der Anschlussleiter (21a) aufweist, um die Anschlussleiter (21a) zu befestigen.

8. Befestigungsvorrichtung für elektrische Kabel nach Anspruch 7, wobei:
das Befestigungselement (B) aus einem ultravioletthärtenden Harz (B) gebildet ist, das durch Bestrahlung mit UV-Strahlen aushärtbar ist, und
der Befestigungsmechanismus Folgendes aufweist:
eine Harzaufbringungsvorrichtung zum Aufbringen des Befestigungselements (B) auf die Vorderabschnitte der Anschlussleiter (21a), und
eine Ultraviolettstrahlungsvorrichtung zum Emittieren der UV-Strahlen in Richtung der Vorderabschnitte der Anschlussleiter (21a), auf die das Befestigungselement (B) aufgebracht ist.

9. Befestigungsvorrichtung für elektrische Kabel nach Anspruch 6, wobei:
das Befestigungselement (50) ein schmelzhärtendes Element ist, das nach Schmelzung aushärtbar ist, und
der Befestigungsmechanismus eine Heizvorrichtung (90) zum Schmelzen des Befestigungselements (50) aufweist.

10. Elektrische Kabelbefestigungsvorrichtung (30), die zum Herstellen eines verbundenen elektrischen Kabels (10) verwendbar ist, wobei das verbundene elektrische Kabel (10) mehrere ummantelte elektrische Kabel (20) und ein Befestigungselement (50, 60, 70, T, B, 22) aufweist, das Vorderabschnitte von mehreren Anschlussleitern (21a), die von den mehreren ummantelten elektrischen Kabeln (20) freiliegen, an einer Position nahe den Vorderenden davon befestigt, wobei die mehreren Anschlussleiter (21a), die mit dem Befestigungselement (50, 60, 70, T, B, 22) befestigt sind, miteinander verbunden sind,
wobei die elektrische Kabelbefestigungsvorrichtung (30) einen Befestigungsmechanismus zum Befestigen der Anschlussleiter (21a) in einem zusammengestellten Zustand mit dem Befestigungselement (50, 60, 70, T, B, 22) aufweist,
**dadurch gekennzeichnet, dass** der Befestigungsmechanismus eine Heizvorrichtung aufweist, wobei die Heizvorrichtung eingerichtet ist:
mehrere isolierende Ummantelungen (22) derart zu schneiden, dass Abschnitte von mehreren isolierenden Ummantelungen (22), die eine Länge aufweisen, die mindestens gleich der der Anschlussleiter (21a) der ummantelten elektrischen Kabel (20) ist, von den verbleibenden Abschnitten der isolierenden Ummantelungen (22) getrennt werden, wobei die getrennten Abschnitte der isolierenden Ummantelungen (22) in einer Richtung zu ihren Vorderenden hin verschoben werden, und
die verschobenen Abschnitte der mehreren isolierenden Ummantelungen (22) derart zu schmelzen, dass die verschobenen Abschnitte als ein schmelzhärtendes Element verwendet werden, das nach Verflüssigung aushärtbar ist.

11. Elektrische Kabelverbindungsvorrichtung (10) zum Herstellen eines verbundenen elektrischen Kabels (10), wobei das verbundene elektrische Kabel (10) mehrere ummantelte elektrische Kabel (20) und ein Befestigungselement (50, 60, 70, T, B, 22) aufweist, das Vorderabschnitte von mehreren Anschlussleitern (21a), die von den mehreren ummantelten elektrischen Kabeln (20) freiliegen, an einer Position nahe den Vorderenden davon befestigt, wobei die mehreren Anschlussleiter (21a), die mit dem Befestigungselement (50, 60, 70, T, B, 22) befestigt sind, miteinander verbunden sind,
wobei die elektrische Kabelverbindungsvorrichtung (10) Folgendes aufweist:
eine elektrische Kabelanordnungsvorrichtung (30) zum Anordnen der mehreren ummantelten elektrischen Kabel (20);
eine elektrische Kabelverbindungsvorrichtung (40) zum Verbinden der mehreren Anschlussleiter (21a); und
die elektrische Kabelbefestigungsvorrichtung nach einem der Ansprüche 6 bis 10.

## Revendications

1. Procédé de connexion de câble électrique pour connecter des conducteurs de borne exposés (21a) d'une pluralité de câbles électriques recouverts (20) de manière à établir une conductivité, le procédé de connexion de câble électrique comprenant :
une étape d'assemblage (s2) consistant à assembler les câbles électriques recouverts (20) ;
une étape de fixation (s3) consistant à fixer les conducteurs de borne (21a) de l'assemblage de la pluralité de câbles électriques (20) avec un élément de fixation (50, 60, 70, T, B, 22) ; et
une étape de jonction (s4) consistant à placer la pluralité de câbles électriques recouverts (20) ayant la pluralité de conducteurs de borne (21a) fixés avec l'élément de fixation dans un dispositif de jonction (40), et à joindre la pluralité de conducteurs de borne exposés (21a) ;
dans lequel
le procédé de connexion de câble électrique comprend en outre une étape de semi-bande (s1), réalisée avant l'étape de fixation (s3), consistant à couper des gaines isolants (22) de sorte que des parties, des gaines isolants (22), ayant une longueur au moins égale à celle des conducteurs de borne exposés (21a) des câbles électriques recouverts (20) sont séparées des parties restantes des gaines isolants (22) et à décaler les parties séparées des gaines isolants (22) dans une direction vers des extrémités de pointe de ceux-ci de sorte que les parties décalées des gaines isolants (22) sont plus proches des extrémités de pointe des câbles électriques recouverts (20) que les conducteurs de borne (21a), **caractérisé en ce que** : l'élément de fixation (50, T, B, 22) est un élément thermodurcissable après fusion;
dans lequel l'étape de fixation (s3) comprend une étape de soudage et de fixation des parties décalées des gaines isolants (22), et
les parties, des gaines isolants (22), qui sont soudées et fixées sont utilisées comme l'élément thermodurcissable.

2. Procédé de connexion de câble électrique selon la revendication 1, comprenant en outre une étape de retrait (s5) consistant à retirer l'élément de fixation (22).

3. Procédé de connexion de câble électrique selon la revendication 2, dans lequel l'étape de retrait (s5) est réalisée avant l'étape de jonction (s4).

4. Procédé de connexion de câble électrique selon la revendication 2, dans lequel l'étape de jonction (s4) est réalisée avant l'étape de retrait (s5).

5. Câble électrique joint (10), comprenant :
une pluralité de câbles électriques recouverts (20) qui sont assemblés ensemble ; et
un élément de fixation (50, 60, 70, T, B, 22) fixant des parties de pointe, d'une pluralité de conducteurs de borne (21a), exposés à partir des câbles électriques recouverts (20) à une position près des extrémités de pointe de ceux-ci,
dans lequel :
la pluralité de conducteurs de borne (21a) fixés avec l'élément de fixation (50, 60, 70, T, B, 22) sont joints ensemble,
dans lequel
des gaines isolants (22) des câbles électriques (20) sont coupées de sorte que des parties, des gaines isolants (22), ayant une longueur au moins égale à celle des conducteurs de borne (21a) des câbles électriques recouverts (20) sont séparées des parties restantes des gaines isolants (22) et les parties séparées des gaines isolants (22) sont décalées dans une direction vers des extrémités de pointe de ceux-ci de sorte que les parties décalées des gaines isolants (22) sont plus proches des extrémités de pointe des câbles électriques recouverts (20) que les conducteurs de borne (21a), **caractérisé en ce que** : l'élément de fixation (50, T, B, 22) est un élément thermodurcissable après fusion;
dans lequel les parties décalées des gaines isolants (22) sont soudées et fixées, et
les parties, des gaines isolants (22), qui sont soudées et fixées sont utilisées comme l'élément thermodurcissable.

6. Dispositif de fixation de câble électrique (30) utilisable pour produire un câble électrique joint (10), le câble électrique joint (10) comprenant une pluralité de câbles électriques recouverts (20) et un élément de fixation (50, 60, 70, T, B, 22) fixant des parties de pointe, d'une pluralité de conducteurs de borne (21a), exposés à partir de la pluralité de câbles électriques recouverts (20) à une position près des extrémités de pointe de ceux-ci, la pluralité de conducteurs de borne (21a) fixés avec l'élément de fixation (50, 60, 70, T, B, 22) étant joints ensemble,
le dispositif de fixation de câble électrique de câble électrique (30) comprenant un mécanisme de fixation pour fixer les conducteurs de borne (21a) dans un état assemblé avec l'élément de fixation (50, 60, 70, T, B),
le mécanisme de fixation est configuré :
pour couper une pluralité de gaines isolants (22) de sorte que des parties, de la pluralité de gaines isolants (22), ayant une longueur au moins égale à celle des conducteurs de borne (21a) des câbles électriques recouverts (20) sont séparées des parties restantes des gaines isolants (22), les parties séparées des gaines isolants (22) étant décalées dans une direction vers des extrémités de pointe de ceux-ci, et
pour attacher l'élément de fixation (50, 60, 70, T, B) aux parties décalées de la pluralité de gaines isolants (22) et fixer les parties décalées des gaines isolants (22),
**caractérisé en ce que** l'élément de fixation (50, 60, 70, T, B) est attaché aux parties décalées de la pluralité de gaines isolants (22) dans un état dans lequel les conducteurs de borne exposés (21a) ne sont pas encore joints ensemble.

7. Dispositif de fixation de câble électrique selon la revendication 6, dans lequel :
l'élément de fixation (50, 60, 70, T, B) est formé d'un ruban adhésif sensible à la pression (T), et
le mécanisme de fixation comprend un dispositif de rubanage (80) pour coller l'élément de fixation (50, 60, 70, T, B) aux parties de pointe des conducteurs de borne (21a) pour fixer les conducteurs de borne (21a).

8. Dispositif de fixation de câble électrique selon la revendication 7, dans lequel :
l'élément de fixation (B) est formé d'une résine durcissable aux ultraviolets (B) durcissable par irradiation avec des rayons ultraviolets, et
le mécanisme de fixation comprend :
un dispositif d'application de résine pour appliquer l'élément de fixation (B) aux parties de pointe des conducteurs de borne (21a), et
un dispositif de rayonnement ultraviolet pour irradier les rayons ultraviolets vers les parties de pointe des conducteurs de borne (21a) ayant l'élément de fixation (B) appliqué à celles-ci.

9. Dispositif de fixation de câble électrique selon la revendication 6, dans lequel :
l'élément de fixation (50) est un élément thermodurcissable après fusion, et
le mécanisme de fixation comprend un dispositif de chauffage (90) pour faire fondre l'élément de fixation (50).

10. Dispositif de fixation de câble électrique (30) utilisable pour produire un câble électrique joint (10), le câble électrique joint (10) comprenant une pluralité de câbles électriques recouverts (20) et un élément de fixation (50, 60, 70, T, B, 22) fixant des parties de pointe, d'une pluralité de conducteurs de borne (21a), exposés à partir de la pluralité de câbles électriques recouverts (20) à une position près des extrémités de pointe de ceux-ci, la pluralité de conducteurs de borne (21a) fixés avec l'élément de fixation (50, 60, 70, T, B, 22) étant joints ensemble,
le dispositif de fixation de câble électrique de câble électrique (30) comprenant un mécanisme de fixation pour fixer les conducteurs de borne (21a) dans un état assemblé avec l'élément de fixation (50, 60, 70, T, B, 22),
**caractérisé en ce que** le mécanisme de fixation comprend un dispositif de chauffage, le dispositif de chauffage étant configuré :
pour couper une pluralité de gaines isolants (22) de sorte que des parties, d'une pluralité de gaines isolants (22), ayant une longueur au moins égale à celle des conducteurs de borne (21a) des câbles électriques recouverts (20) sont séparées des parties restantes des gaines isolants (22), les parties séparées des gaines isolants (22) étant décalées dans une direction vers des parties de pointe de ceux-ci, et
pour faire fondre les parties décalées de la pluralité de gaines isolants (22) de sorte que les parties décalées sont utilisées comme un élément thermodurcissable après fusion.

11. Dispositif de production de câble électrique joint (10) pour produire un câble électrique joint (10), le câble électrique joint (10) comprenant une pluralité de câbles électriques recouverts (20) et un élément de fixation (50, 60, 70, T, B, 22) fixant des parties de pointe, d'une pluralité de conducteurs de borne (21a), exposés à partir de la pluralité de câbles électriques recouverts (20) à une position près des extrémités de pointe de ceux-ci, la pluralité de conducteurs de borne (21a) fixés avec l'élément de fixation (50, 60, 70, T, B, 22) étant joints ensemble,
le dispositif de production de câble électrique joint (10) comprenant :
un dispositif de disposition de câble électrique (30) pour disposer la pluralité de câbles électriques recouverts (20) ;
un dispositif de connexion de câble électrique (40) pour connecter la pluralité de conducteurs de borne (21a) ; et
le dispositif de fixation de câble électrique selon l'une quelconque des revendications 6 à 10.
